# FASCICULE DE BREVET EUROPEEN

(11) **EP 2 033 834 B1**
(45) Date de publication et mention de la délivrance du brevet: **12.02.2020**
(21) Numéro de dépôt: 08163382.8
(22) Date de dépôt: 01.09.2008
(51) Int. Cl.: B60L 7/06, H02P 3/22, H02P 6/24, B60L 7/00

(54) **Dispositif de freinage rhéostatique sécuritaire à ensemble résistif bipolaire avec moteur à aimants permanents**
Rheostatische Sicherheitsbremsvorrichtung mit zweipoligem Widerstandsblock und Dauermagnetmotor
Device for secure dynamic braking with a bipolar resistive element with permanent magnet motor

(30) Priorité: 04.09.2007 FR 0757338
(43) Date de publication de la demande: 11.03.2009
(73) Titulaire: ALSTOM Transport Technologies, 93400 Saint-Ouen (FR)
(72) Inventeur: Jobard, Thierry, 69004 Lyon (FR); Bonin, Eric, 38200 Jardin (FR)
(74) Mandataire: Lavoix

(56) Documents cités:
- WO-A-03/049256
- JP-A- 1 133 583
- US-B1- 6 445 879

## Description

L'invention se rapporte à un dispositif de freinage électrique sécuritaire destiné à un véhicule à motorisation électrique, par exemple un véhicule ferroviaire.

Un freinage sécuritaire garantit la réalisation de l'effort de freinage souhaité de manière extrêmement fiable.

On distingue dans le domaine ferroviaire principalement deux types de freinage : le freinage de service et le freinage d'urgence.

Le freinage de service est celui qui est le plus couramment utilisé en exploitation. Il est modulable entre une valeur minimale d'effort proche de 0 et une valeur maximale d'effort. Il peut se décomposer lui-même en plusieurs modes, selon les trains : frein purement électrique, frein purement mécanique ou frein conjugué électrique et mécanique. Il sert à effectuer tous les arrêts et ralentissements « normaux » du train, ainsi que les freinages de maintien dans les pentes. Mais il n'est pas sécuritaire, en ce sens qu'il met en œuvre un grand nombre de composants électriques, électroniques, mécaniques, pneumatiques ou hydrauliques qui peuvent tomber en panne et donc entraîner un effort de freinage différent de celui souhaité, voire même, avec les nouvelles chaînes de traction à commutation traction / freinage statique, un effort de traction.

Le freinage d'urgence est utilisé seulement, comme son nom l'indique, en cas d'urgence. Ce cas d'urgence peut être motivé, soit par une situation d'urgence extérieure, soit par une panne du frein de service. Le but de ce frein est d'arrêter le train le plus vite et le plus sûrement possible. Ce frein n'est pas modulable, mais est sécuritaire, c'est-à-dire que sa probabilité de défaillance doit être extrêmement basse. Ce frein doit donc utiliser le moins de composants possible. Généralement il est purement mécanique, mais ceci nécessite un dimensionnement du frein mécanique en conséquence, ce qui peut s'avérer prohibitif en coût ou en masse, notamment sur un train à grande vitesse où les énergies de freinage à dissiper sont importantes. C'est pourquoi il peut être très intéressant de réaliser un freinage électrique de sécurité.

Cette invention propose un freinage électrique sécuritaire basé sur le fait qu'un moteur électrique à aimants permanents n'a besoin de rien pour être fluxé et donc fournir un couple résistant dès qu'il tourne, pour peu qu'il soit chargé.

Un type de freinage électrique sécuritaire est décrit dans la demande de brevet allemande publiée sous DE 10160 612 A1. Le dispositif mettant en œuvre ce freinage comprend un réseau de trois résistances de freinage reliées en étoiles apte à être couplé à l'aide d'un commutateur de type électromécanique comprenant un ensemble de relais à un moteur électromécanique triphasé.

Les documents WO 03/049256 A, JP 1 133 583 A et US 6 445 879 B décrivent encore d'autres systèmes de freinage.

Le problème technique est l'encombrement de ce dispositif, notamment des trois résistances de freinage.

A cet effet, l'invention a pour objet un dispositif de freinage électrique sécuritaire destiné à un véhicule de traction électrique, en particulier à un véhicule ferroviaire, selon la revendication 1.

Suivant des modes particuliers de réalisation, le dispositif de freinage comporte l'une ou plusieurs des caractéristiques suivantes :
- les moyens de conversion sont constitués d'un pont redresseur à diodes interposé entre le commutateur électromécanique et l'ensemble bipolaire d'au moins une résistance dissipative ;
- le dispositif comprend un hacheur ayant au moins une résistance de freinage de hacheur et au moins une résistance de hacheur est une résistance dissipative de l'ensemble bipolaire ;
- une seule résistance de freinage du hacheur est une résistance de l'ensemble bipolaire et en ce que le hacheur comprend deux relais auxiliaires commutateurs, connectés de part et d'autre de la résistance de freinage du hacheur formant une résistance de l'ensemble bipolaire, et aptes à déconnecter respectivement connecter la résistance de freinage du hacheur respectivement aux moyens de conversion ;
- l'ensemble bipolaire d'au moins une résistance dissipative comprend une seule résistance dissipative ;
- l'ensemble bipolaire d'au moins une résistance dissipative comprend seulement deux résistances ;
- le dispositif comprend un onduleur de traction et les moyens de conversion sont un pont redresseur triphasé constitué des diodes de l'onduleur de traction ;
- l'ensemble bipolaire est constitué d'une résistance et d'un contacteur connectés en série, cet ensemble étant connecté en parallèle sur l'onduleur de traction ; et
- la résistance est constituée d'une partie ou de la totalité de la résistance de freinage du hacheur de freinage rhéostatique.

L'invention concerne aussi un dispositif de freinage selon la revendication 1.

Suivant des modes particuliers de réalisation, le dispositif de freinage comporte l'une ou plusieurs des caractéristiques des revendications 2 à 8.

L'invention sera mieux comprise à la lecture de la description des formes de réalisation qui vont suivre, données uniquement à titre d'exemple et faites en se référant aux dessins sur lesquels :
- la Figure 1 est une vue schématique d'une première forme de réalisation d'un frein électrique sécuritaire intégrée dans une chaîne de traction électrique,
- la Figure 2 est une vue schématique d'une deuxième forme de réalisation d'un frein électrique sécuritaire intégré dans une chaîne de traction électrique,
- la Figure 3 est une vue schématique d'une troisième forme de réalisation d'un frein électrique sécuritaire hybride des première et deuxième formes de réalisation,
- la Figure 4 est une vue schématique d'une quatrième forme de réalisation d'un frein électrique sécuritaire intégré dans une chaîne de traction électrique,

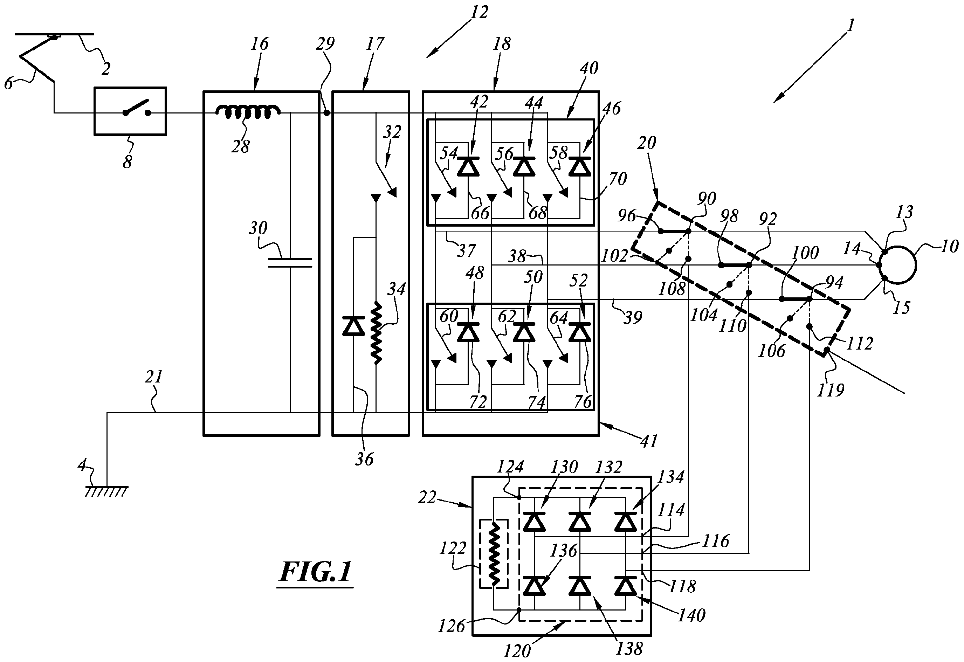

La Figure 1 représente une première forme de réalisation d'un frein électrique dit sécuritaire intégré dans une chaîne de traction électrique 1.

La chaîne de traction 1 est alimentée à l'aide d'une ligne caténaire (ou d'un 3^{ème} rail) 2 sous haute tension référencée par une masse 4 liée à la terre.

La chaîne de traction électrique 1 comprend un pantographe (ou un frotteur) 6 de captage de l'énergie électrique depuis la ligne caténaire 2 suivi d'un disjoncteur de ligne 8 servant d'interrupteur/contacteur principal entre la chaîne de traction 1 et la ligne caténaire 2.

La chaîne de traction électrique 1 comprend également une machine électromécanique tournante 10 apte à être alimentée par un convertisseur électronique de puissance 12.

La machine électromécanique tournante 10 comprend ici un stator à alimentation triphasée pourvu de bornes électriques d'entrée 13, 14, 15 et un rotor dont l'excitation est fournie par un aimant permanent.

En mode de traction électrique, la machine électromécanique 10 fonctionne en moteur tandis qu'en mode de freinage électrique, elle fonctionne en génératrice de tension.

Le convertisseur électronique de puissance 12 comprend, en cascade depuis le disjoncteur 8 vers le moteur 10, un filtre de ligne 16, un hacheur de freinage rhéostatique 17 et un onduleur 18, ici à sortie triphasée, apte à alimenter le moteur 10 au travers d'un commutateur électromécanique de raccordement 20.

L'ensemble des éléments de la chaîne de traction 1 est raccordé à la masse commune 4 au travers d'une ligne de retour de masse 21.

La chaîne de traction électrique 1 outre son aptitude à fonctionner en chaîne de traction est apte à fonctionner également comme un premier frein électrique, non sécuritaire dit de service.

Le premier frein électrique dit de service comprend les composants de la chaîne de traction 1, à savoir la génératrice 10, l'onduleur 18 configuré en redresseur, le hacheur de freinage rhéostatique 17, le filtre de ligne 16, et le commutateur électromécanique 20.

Un deuxième frein électrique dit sécuritaire comprend outre la machine électromécanique tournante 10, le commutateur électromécanique 20 et, un dispositif résistif de production du couple de freinage 22 de type dissipatif.

Le filtre de ligne 16 comprend ici une structure classique « LC » formée d'une inductance de ligne 28 montée en série entre le disjoncteur 8 et une entrée ligne 29 du hacheur 17, et d'un condensateur 30 branché électriquement en parallèle près de l'entrée 29 du hacheur 17.

Le hacheur de freinage rhéostatique 17 comprend un interrupteur de puissance 32, de type IGBT (Insulated Gate Bipolar Transistor ou transistor bipolaire à grille isolée) par exemple, servant de régulateur, connecté en série à une résistance de freinage rhéostatique 34.

Le hacheur de freinage rhéostatique 17 comprend également une diode de roue libre 36 branchée en parallèle sur la résistance de freinage 34.

L'onduleur 18 comprend trois lignes de sorties alternatives triphasées 37, 38, 39, chacune apte à être connectée respectivement à une borne électrique d'entrée 13, 14, 15 de phase stator du moteur 10 par une connexion réalisée à l'aide du commutateur électromécanique 20.

L'onduleur 18 a une structure classique à six interrupteurs électroniques de puissance connectés en trois phases raccordées entre la sortie du filtre d'entrée 16 et la ligne de retour de masse 21.

Chaque interrupteur électronique de puissance 42, 44, 46, 48, 50, 52 comprend respectivement un transistor de puissance de type IGBT par exemple 54, 56, 58, 60, 62, 64, commandable en état passant/non passant par une tension de grille, chaque transistor de puissance étant associé à une diode de roue libre 66, 68, 70, 72, 74 et 76 montée en anti-parallèle sur ce dernier.

Ici, sur la figure 1, la flèche de chaque transistor de puissance représente le sens de passage du courant lorsque ce transistor est passant.

Chaque interrupteur de puissance 42, 44, 46 est respectivement associé à un interrupteur de puissance 48, 50, 52, la sortie d'un des premiers étant reliée à l'entrée d'un des seconds et formant une sortie de l'onduleur, chaque sortie étant reliée à une ligne de sortie de l'onduleur respectivement 37, 38, 39.

Les circuits de commande des interrupteurs électroniques de puissance ne sont pas représentés sur la figure 1 et sont supposés aptes à fournir un fonctionnement synchrone de traction à la machine électromécanique 10 en mode moteur.

Le commutateur électromécanique 20 comprend un ensemble de trois plots d'entrée respectivement référencés 90, 92 et 94 connectées aux bornes électriques 13, 14 et 15 d'entrée des phases stator du moteur 10.

Le commutateur électromécanique 20 comprend également un premier groupe de plots de sortie 96, 98, 100 connectés respectivement aux lignes de sortie 37, 38, 39 de l'onduleur 18.

Le commutateur électromécanique 20 comprend également un deuxième groupe de plots de sortie 102, 104 et 106 isolés électriquement aptes à être connectés respectivement aux plots d'entrée 90, 92 et 94 pour isoler le moteur 10 de l'onduleur 18.

Le commutateur électromécanique 20 comprend un troisième groupe de plots de sortie 108, 110 et 112, chaque plot de sortie 108, 110 et 112 étant connecté respectivement à une entrée 114, 116 et 118 du dispositif de production de couple de freinage 22 du frein électrique sécuritaire.

Le commutateur électromécanique 20 comprend une entrée de commande 119 apte à recevoir une commande de commutation permettant de commuter au choix l'ensemble des liaisons électriques réalisées par des éléments de contact mécaniques, depuis les plots d'entrée 90, 92 et 94 sur des plots de sortie, entre le premier groupe de plots de sortie, le deuxième groupe de plots de sortie et le troisième groupe de plots de sortie.

Le commutateur électromécanique 20 étant constitué d'éléments passifs en nombre limité est sécuritaire et fiable.

Le dispositif de production du couple de freinage 22 est formé d'un pont de diodes 120 classique, configuré passivement en pont redresseur, avec trois entrées 114, 116 et 118 aptes à recevoir une alimentation, ici triphasée, et d'une résistance de charge unique 122, bipolaire, terminale branchée entre deux seules sorties 124 et 126 du pont de diodes. Le pont de diodes est ici composé de six diodes 130, 132, 134, 136, 138 et 140.

En fonctionnement, en mode de traction la machine électromécanique 10 fonctionne en moteur et le commutateur électromécanique 20 est alors configuré de telle sorte que les plots de sorties du premier groupe sont reliés aux plots d'entrée 90, 92, 94. Ainsi l'onduleur 18 alimente le moteur 10 en onde de courant sinusoïdal adapté de manière synchrone à la vitesse du moteur.

Lors d'un freinage de service, le commutateur électromécanique 20 garde le même état que lors de la traction.

L'onduleur 18 est configuré pour fonctionner dans un mode redresseur et le hacheur 17 est piloté pour renvoyer sur la caténaire 6 la part de puissance de freinage qu'elle peut accepter, le reste de cette puissance de freinage étant dissipée dans la résistance 34.

Lors d'un freinage électrique sécuritaire, le commutateur électromécanique 20 est commuté successivement sur le deuxième groupe puis le troisième groupe de plots de sortie de façon à isoler le moteur 10 du convertisseur de puissance 12, puis à connecter chaque borne 13, 14, 15 de la machine tournante 10 fonctionnant en génératrice au dispositif de production du couple de freinage 22 via les entrées respectives 114, 116 et 118.

Après redressement des courants alternatifs de sortie de la génératrice 10, le pont de diodes redresseur 120, alimente en énergie électrique continue la résistance unique 122 qui dissipe l'énergie électrique sous forme calorifique par effet Joule.

L'avantage procuré par l'utilisation d'une seule ou plusieurs résistances 122 aux deux seules bornes de sortie d'un pont redresseur résulte dans la simplification du schéma électrique résistif et dans le gain en place procuré par la diminution du nombre de résistances de même valeur normalement disposés entre chaque paire de phases (montage polygonal) ou en série sur chaque phase (montage en étoile).

La place occupée par le pont redresseur à diodes étant faible par rapport à celle associée à une résistance et la structure formée par la première forme de réalisation pouvant également être utilisée pour un nombre quelconque de phases stator de moteur moyennant l'ajout de diodes au pont, l'utilisation d'une seule résistance de charge permet avantageusement d'économiser de la place.

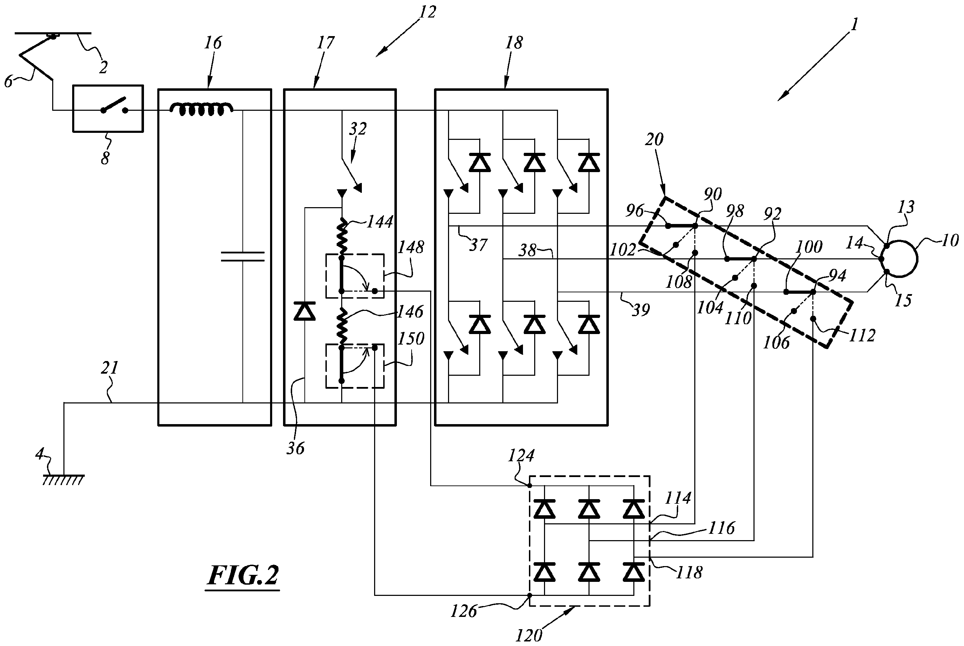

La figure 2 représente une deuxième forme de réalisation du frein électrique sécuritaire intégré dans la chaîne de traction électrique.

La chaîne de traction 1 est analogue à celle décrite dans la figure 1, et diffère en ce que la résistance rhéostatique de freinage 34 du hacheur 17 de la figure 1 est remplacée par un ensemble de deux résistances en série 144, 146, en ce que la résistance située le plus proche de la ligne de retour de masse 21, ici la résistance 146 sert de résistance de charge pour le frein électrique sécuritaire, et qu'il est disposé de part et d'autre de la résistance 146 deux commutateurs électromécaniques 148, 150, l'un, 148, permettant de connecter une borne de la résistance 146, soit à la résistance 144, soit à la sortie 124 du pont de diode 120 du frein électrique sécuritaire et l'autre, 150, de connecter l'autre borne de la résistance 146, soit à la sortie 126 du pont de diode 120 du frein électrique sécuritaire, soit à la ligne de retour de masse 21 du hacheur.

En d'autres termes, la résistance 146 est apte à être connectée, grâce aux deux commutateurs 148, 150, soit aux bornes du pont redresseur du frein électrique sécuritaire et jouer ainsi le rôle de la résistance 122 de la figure 1, soit en série avec la résistance 144 pour former la résistance de freinage du hacheur 17 (comme la résistance 34 de la figure 1).

Un cas particulier de cette deuxième forme de réalisation est obtenu lorsque la résistance 144 est nulle, c'est-à-dire absente. Dans ce cas, la résistance 146 joue à la fois le rôle de la résistance 34 du hacheur rhéostatique de la figure 1 et de la résistance 122 du dispositif de production d'un couple de freinage 22 de la figure 1.

Le fonctionnement en mode de traction et en mode de freinage de service est identique à celui décrit pour la figure 1.

Lors d'un freinage électrique sécuritaire, la séquence de commutation de plots de sortie du commutateur électromécanique 20 est identique à celle décrite pour la figure 1.

En parallèle, à la commutation du commutateur électromécanique 20, les deux commutateurs 148, 150 déconnectent la résistance 146 du hacheur 17 et la connectent aux bornes 124, 126 du pont redresseur 120.

Ainsi, le pont de diodes redresseur 120, alimente en énergie électrique continue la résistance unique 146 qui dissipe l'énergie électrique de freinage sous forme calorifique par effet Joule.

La configuration de la figure 2 procure une économie de place plus grande encore sur les résistances de freinage puisqu'une partie voire la totalité de la résistance du hacheur rhéostatique est réutilisée en freinage de sécurité.

L'accroissement relatif de place résultant des deux commutateurs électromécaniques 148, 150 est faible par rapport au gain supplémentaire de place obtenu par la réutilisation de la résistance.

Le gain est maximal lorsque le freinage de sécurité n'utilise que la résistance du hacheur rhéostatique c'est-à-dire lorsque la résistance 144 est de valeur nulle. Aucune résistance supplémentaire n'est alors à ajouter pour le frein de sécurité.

Le degré de sécurité du schéma de la figure 2 est équivalent à celui de la figure 1 dans le sens où seuls des commutateurs électromécaniques passifs sont utilisés, à savoir les commutateurs 20, 148 et 150, et où la connexion au hacheur 17 est parfaitement isolée.

Une variante de cette deuxième forme de réalisation consiste à connecter les résistances 144 et 146 en parallèle au lieu de les connecter en série comme sur la figure 2. Le commutateur 148 permet alors de connecter une des bornes de la résistance 146, soit à la borne de la résistance 144 côté interrupteur 32, soit à la sortie 124 du pont de diode 120 du frein électrique sécuritaire et le commutateur 150 permet alors de connecter l'autre borne de la résistance 146, soit à la borne de la résistance 144 côté ligne de retour de masse 21, soit à la sortie 124 du pont de diode 120 du frein électrique sécuritaire.

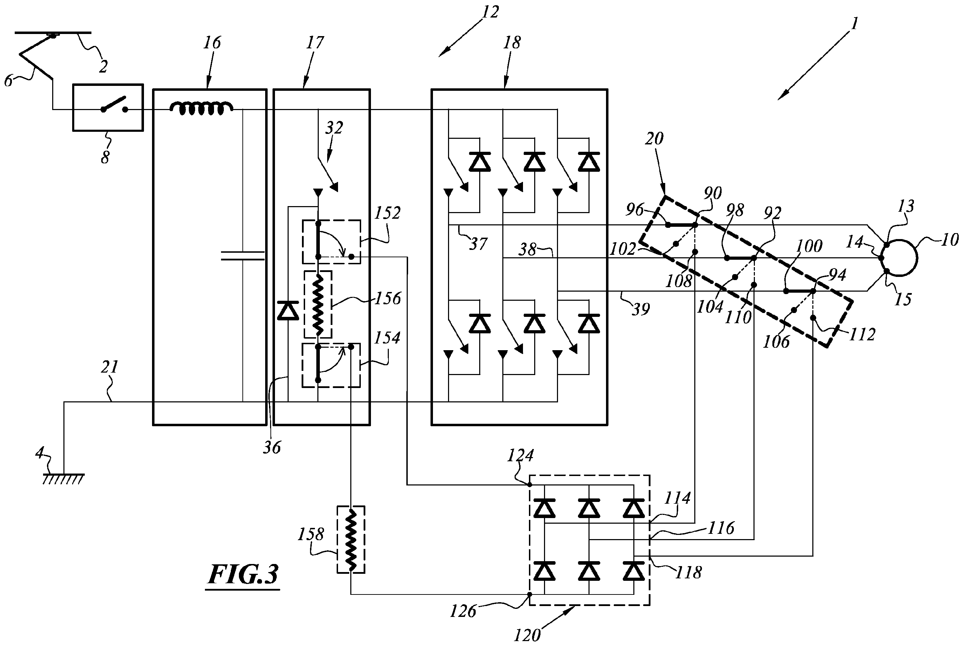

La figure 3 représente une troisième forme de réalisation du frein électrique sécuritaire complémentaire aux première et deuxième formes de réalisation décrites dans les figures 1 et 2.

La chaîne de traction 1 est analogue à celle de la figure 1 et en diffère en ce que deux commutateurs électromécaniques auxiliaires 152 et 154 branchés respectivement aux bornes d'une résistance unique de freinage rhéostatique 156 du hacheur 17 sont aptes à déconnecter la résistance 156 de la ligne de retour de masse 21 et à la connecter en série à une résistance externe 158 connectée de manière permanente au pont de diodes 120 à l'entrée 126 et à la sortie du commutateur auxiliaire 154.

La résistance de charge du dispositif de production du couple de freinage 22 du frein électrique sécuritaire est composée de la résistance externe 158 et de la résistance unique 156 du frein rhéostatique du hacheur 17.

Le fonctionnement en mode de traction et en mode de freinage de service est identique à celui décrit pour les figures 1 et 2.

Lors d'un freinage électrique sécuritaire, la séquence de commutation de plots de sortie du commutateur électromécanique 20 est identique à celle décrite pour les figures 1 et 2.

En parallèle à la commutation du commutateur électromécanique 20, les deux commutateurs 152, 154 déconnectent la résistance 156 du hacheur 17, connectent une de ses extrémités à la borne 124 du pont redresseur 120 et l'autre extrémité à la résistance externe 158, reliée à la borne 126 du pont redresseur.

Ainsi, le pont de diodes redresseur 120, alimente en énergie électrique continue l'ensemble série des deux résistances 156, 158 qui dissipe l'énergie électrique de freinage sous forme calorifique par effet Joule.

Bien que la résistance externe 158 s'ajoute à la résistance du hacheur 156, du fait de la valeur insuffisante de cette dernière dans le cas d'utilisation d'un freinage sécuritaire à haute vitesse, une telle structure permet d'économiser encore de la place par rapport à la structure de la figure 1, du fait de la réutilisation de la résistance du hacheur.

Le degré de sécurité est également identique à celui des première et deuxième formes de réalisation.

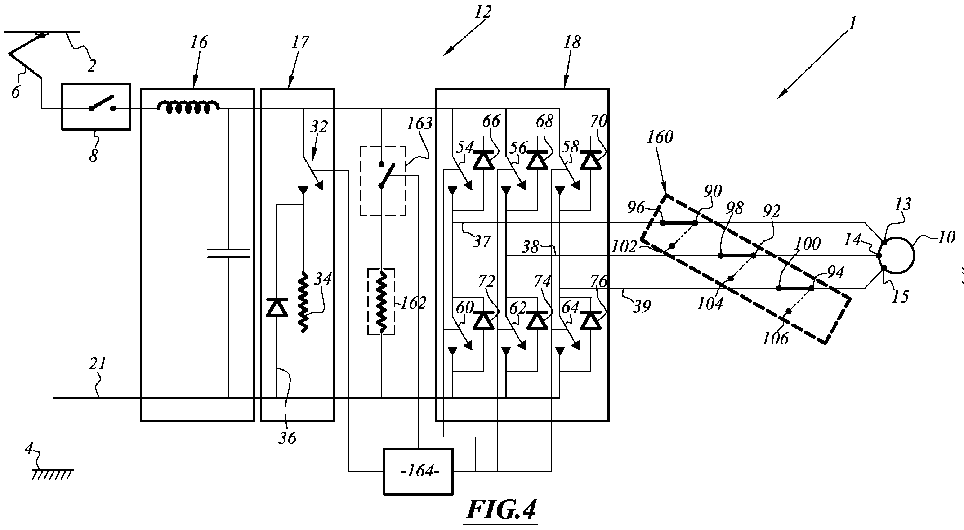

La figure 4 représente une quatrième forme de réalisation de frein électrique sécuritaire intégré à la chaîne de traction électrique 1, de degré sécuritaire légèrement inférieur à celui des première, deuxième et troisième formes de réalisation.

La chaîne de traction électrique 1 est analogue à celle des trois formes de réalisation et diffère de celle de la figure 1 en ce que :
- le commutateur électromécanique 20, à trois groupes de plots de sortie, est remplacé par un commutateur électromécanique 160 comportant seulement les premier et deuxième groupes de plots de sortie ;
- le dispositif de production d'un couple de freinage 22 est ici constitué :
   ∘ du pont de diodes de roue libre 66, 68, 70, 72, 74, 76 de l'onduleur 18,
   ∘ d'une résistance de charge 162 connectée en série à un contacteur électromécanique 163, l'ensemble étant branché entre le hacheur 17 et l'onduleur 18,
   ∘ d'un circuit de blocage 164 permettant de bloquer en sécurité les interrupteurs de puissance 54, 56, 58, 60, 62, 64 de l'onduleur 18 et 32 du hacheur 17 et à fermer le contacteur 163.

Le commutateur électromécanique 160 sert à déconnecter le moteur 10 de l'onduleur 18, en cas de court-circuit de ce dernier. Ce commutateur est alors celui classiquement utilisé dans ce type de chaînes de traction et n'est pas modifié par l'invention.

Le fonctionnement en mode de traction et en mode de freinage de service est identique à celui décrit pour les figures 1,2 et 3.

Lors d'un freinage électrique sécuritaire, le commutateur électromécanique 160 reste dans l'état où la machine électromécanique 10 est connectée à l'onduleur 18.

Les circuits de blocage 164 commandent les six transistors de puissance 54, 56, 58, 60, 62, 64 de l'onduleur 18 et le transistor de puissance 32 à l'état ouvert.

Parallèlement, les circuits 164 commandent la fermeture du commutateur électromécanique auxiliaire 163.

Ainsi, l'onduleur de puissance 18 joue ici le rôle d'un simple pont redresseur constitué des diodes 66, 68, 70, 72, 74, 76. Les circuits de blocage 164 empêchent de manière sécuritaire l'onduleur 18 de fonctionner en onduleur.

Ainsi, le pont de diodes de roue libre 66, 68, 70, 72, 74, 76 joue le rôle du pont redresseur 120 des figures 1, 2 et 3 ; il débite l'énergie du générateur 10 dans la résistance de charge 162 alors connectée au pont.

L'avantage de cette solution par rapport aux trois précédentes est qu'elle ne nécessite aucun ajout de composants d'électronique de puissance, puisque le pont redresseur est réalisé avec les diodes de roue libre existantes de l'onduleur de traction. En revanche elle est un peu moins sécuritaire que les précédentes car le freinage de sécurité est inutilisable en cas de casse en court-circuit de l'onduleur 18.

Par analogie aux variantes de réalisation de la figure 1 décrites par les figures 2 et 3, on peut imaginer des variantes de réalisation de la figure 4 où la résistance 162 est réalisée, grâce à un jeu de 2 contacteurs, par une partie de la résistance 34 (comme sur la figure 2) ou au contraire où la résistance 162 est constituée de la résistance 34 en série avec une résistance additionnelle (comme sur la figure 3). Un cas particulier est que cette résistance 162 est constituée uniquement de la résistance 34 (comme dans le cas où la résistance 144 de la figure 2 est nulle). Dans ce cas, le frein de sécurité ne nécessite que l'ajout du contacteur 163 et du circuit de commande 164 par rapport au schéma électrique sans frein de sécurité, il est donc très économe en place, en poids et en coût.

## Revendications

1. Dispositif de freinage électrique sécuritaire destiné à un véhicule de traction électrique, en particulier à un véhicule ferroviaire, comprenant
une machine électromécanique tournante (10) à aimants permanents avec des bornes électriques (13, 14, 15),
un dispositif résistif de production d'un couple de freinage (22),
un commutateur électromécanique (20) apte à relier de manière sécuritaire les bornes électriques (13, 14, 15) de la machine au dispositif de production d'un couple de freinage (22),
**caractérisé en ce que**
le dispositif résistif de production d'un couple de freinage (22) comprend d'une part un ensemble bipolaire (122) d'au moins une résistance dissipative, l'ensemble ayant deux bornes uniques de connexion et formant une charge électrique bipolaire terminale commune de débit pour toutes les bornes (13, 14, 15) de la machine et d'autre part des moyens de conversion (120) des courants issus de toutes les bornes (13, 14, 15) en un seul courant délivré aux deux bornes uniques de l'ensemble bipolaire (122), lesdits moyens de conversion (120) étant dépourvus d'interrupteurs de puissance actifs, les moyens de conversion (120) étant constitués d'un pont redresseur à diodes interposé entre le commutateur électromécanique (20) et l'ensemble bipolaire (122) d'au moins une résistance dissipative (122, 146, 156, 158), la résistance dissipative (122, 146, 156, 158) étant branchée entre les deux seules sorties (124, 126) du pont redresseur à diodes.

2. Dispositif de freinage électrique sécuritaire selon la revendication 1, **caractérisé en ce qu'**il comprend un hacheur (17) ayant au moins une résistance de freinage de hacheur (156, 146, 144) et **en ce que** au moins une résistance de hacheur (156,146) est une résistance dissipative de l'ensemble bipolaire.

3. Dispositif de freinage électrique sécuritaire selon la revendication 2, **caractérisé en ce qu'**une seule résistance de freinage du hacheur (146,156) est une résistance de l'ensemble bipolaire et **en ce que** le hacheur (17) comprend deux relais auxiliaires commutateurs (148, 150 ; 152, 154), connectés de part et d'autre de la résistance de freinage du hacheur (146, 156) formant une résistance de l'ensemble bipolaire, et aptes à déconnecter respectivement connecter la résistance de freinage du hacheur (17) respectivement aux moyens de conversion (120).

4. Dispositif de freinage électrique sécuritaire selon l'une quelconque des revendications 1 à 3, **caractérisé en ce que** l'ensemble bipolaire d'au moins une résistance dissipative comprend une seule résistance dissipative (122, 146).

5. Dispositif de freinage électrique sécuritaire selon l'une quelconque des revendications 1 à 3, **caractérisé en ce que** l'ensemble bipolaire d'au moins une résistance dissipative comprend seulement deux résistances (156, 158).

6. Dispositif de freinage électrique sécuritaire selon la revendication 1, **caractérisé en ce qu'**il comprend un onduleur de traction (18) et que les moyens de conversion (120) sont un pont redresseur triphasé constitué des diodes de l'onduleur de traction (18).

7. Dispositif de freinage électrique sécuritaire selon la revendication 6, **caractérisé en ce que** l'ensemble bipolaire (122) est constitué d'une résistance (162) et d'un contacteur (163) connectés en série, cet ensemble étant connecté en parallèle sur l'onduleur de traction (18).

8. Dispositif de freinage électrique sécuritaire selon les revendications 2 ou 7, **caractérisé en ce que** la résistance (162) est constituée d'une partie ou de la totalité de la résistance de freinage du hacheur de freinage rhéostatique (17).

## Patentansprüche

1. Elektrische Sicherheitsbremsvorrichtung für ein Fahrzeug mit elektrischem Antrieb, insbesondere ein Schienenfahrzeug, aufweisend
eine rotierende elektromechanische Maschine (10) mit Permanentmagneten und elektrischen Anschlüssen (13, 14, 15),
eine Widerstandsvorrichtung zum Erzeugen eines Bremsmoments (22),
einen elektromechanischen Schalter (20), der geeignet ist, die elektrischen Anschlüsse (13, 14, 15) der Maschine sicher mit der Vorrichtung zum Erzeugen eines Bremsmoments (22) zu verbinden,
**dadurch gekennzeichnet, dass**
die Widerstandsvorrichtung zum Erzeugen eines Bremsmoments (22) einerseits eine bipolare Anordnung (122) mit mindestens einem dissipativen Widerstand aufweist, wobei die Anordnung zwei einzelne Verbindungsanschlüsse aufweist und eine gemeinsame bipolare elektrische Anschlusslast für alle Anschlüsse (13, 14, 15) der Maschine bildet und andererseits Mittel (120) zum Umwandeln der von allen Anschlüssen (13, 14, 15) ausgegebenen Ströme in einen alleinigen Strom, aufweist der an die beiden einzelnen Anschlüsse der bipolaren Anordnung (122) geliefert wird, wobei die Umwandlungsmittel (120) frei von aktiven Leistungsschaltern sind, wobei die Umwandlungsmittel (120) aus einer Diodengleichrichterbrücke bestehen, die zwischen dem elektromechanischen Schalter (20) und der bipolaren Anordnung (122) mit mindestens einem dissipativen Widerstand (122, 146, 156, 158) angeordnet ist, wobei der dissipative Widerstand (122, 146, 156, 158) zwischen die beiden alleinigen Ausgänge (124, 126) der Diodengleichrichterbrücke geschaltet ist.

2. Elektrische Sicherheitsbremsvorrichtung nach Anspruch 1, **dadurch gekennzeichnet, dass** sie einen Zerhacker (17) mit mindestens einem Zerhackerbremswiderstand (156, 146, 144) aufweist und dass mindestens ein Zerhackerwiderstand (156, 146) ein dissipativer Widerstand der bipolaren Anordnung ist.

3. Elektrische Sicherheitsbremsvorrichtung nach Anspruch 2, **dadurch gekennzeichnet, dass** nur ein alleiniger Zerhackerbremswiderstand (146, 156) ein Widerstand der bipolaren Anordnung ist und dass der Zerhacker (17) zwei Hilfsschaltrelais (148, 150; 152, 154) aufweist, die auf beiden Seiten des Zerhackerbremswiderstands (146, 156), der einen Widerstand der bipolaren Anordnung bildet, geschaltet sind, und zum Trennen bzw. Verbinden des Zerhackerbremswiderstands (17) und der Umwandlungsmittel (120) geeignet sind.

4. Elektrische Sicherheitsbremsvorrichtung nach einem der Ansprüche 1 bis 3, **dadurch gekennzeichnet, dass** die bipolare Anordnung mindestens eines dissipativen Widerstands einen alleinigen dissipativen Widerstand (122, 146) aufweist.

5. Elektrische Sicherheitsbremsvorrichtung nach einem der Ansprüche 1 bis 3, **dadurch gekennzeichnet, dass** die bipolare Anordnung mindestens eines dissipativen Widerstands nur zwei Widerstände (156, 158) aufweist.

6. Elektrische Sicherheitsbremsvorrichtung nach Anspruch 1, **dadurch gekennzeichnet, dass** sie einen Antriebswechselrichter (18) aufweist und dass die Umwandlungsmittel (120) eine dreiphasige Gleichrichterbrücke sind, die aus den Dioden des Antriebswechselrichters (18) bestehen.

7. Elektrische Sicherheitsbremsvorrichtung nach Anspruch 6, **dadurch gekennzeichnet, dass** die bipolare Anordnung (122) aus einem Widerstand (162) und einem Schütz (163), die in Reihe geschaltet sind, besteht, wobei die Anordnung parallel zum Traktionswechselrichter (18) geschaltet ist.

8. Elektrische Sicherheitsbremsvorrichtung nach den Ansprüchen 2 oder 7, **dadurch gekennzeichnet, dass** der Widerstand (162) ganz oder teilweise aus dem Bremswiderstand des Widerstandsbremszerhackers (17) besteht.

## Claims

1. Electric safety braking device which is intended for an electric traction vehicle, in particular a rail vehicle comprising:
a rotating electromechanical machine (10) having permanent magnets with electric terminals (13, 14, 15),
a resistive braking torque production device (22),
an electromechanical commutator (20) which is capable of reliably connecting the electric terminals (13, 14, 15) of the machine to the braking torque production device (22),
**characterised in that**
the resistive braking torque production device (22) comprises, on the one hand, a bipolar assembly (122) of at least one dissipative resistor, the assembly having two single connection terminals and forming a common terminal bipolar electric output load for all the terminals (13, 14, 15) of the machine and, on the other hand, means (120) for converting the currents from all the terminals (13, 14, 15) into a single current which is supplied to the two single terminals of the bipolar assembly (122), the conversion means (120) having no active power switches, the conversion means (120) being constituted by a diode bridge rectifier which is interposed between the electromechanical commutator (20) and the bipolar assembly (122) of at least one dissipative resistor (122, 146, 156, 158), the dissipative resistor (122, 146, 156, 158) being connected between two single outputs (124, 126) of the diode bridge rectifier.

2. Electric safety braking device according to claim 1, **characterised in that** it comprises a chopper (17) which has at least one chopper brake resistor (156, 146, 144) and **in that** at least one chopper resistor (156, 146) is a dissipative resistor of the bipolar assembly.

3. Electric safety braking device according to claim 2, **characterised in that** a single chopper brake resistor (146, 156) is a resistor of the bipolar assembly and **in that** the chopper (17) comprises two auxiliary commutating relays (148, 150; 152, 154) which are connected at one side and the other of the chopper brake resistor (146, 156) which forms a resistor of the bipolar assembly, and which are capable of disconnecting or connecting the brake resistor of the chopper (17) from/to the conversions means (120), respectively.

4. Electric safety braking device according to any one of claims 1 to 3, **characterised in that** the bipolar assembly of at least one dissipative resistor comprises a single dissipative resistor (122, 146).

5. Electric safety braking device according to any one of claims 1 to 3, **characterised in that** the bipolar assembly of at least one dissipative resistor comprises only two resistors (156, 158).

6. Electric safety braking device according to claim 1, **characterised in that** it comprises a traction inverter (18) and the conversion means (120) are a three-phase rectifier bridge which is constituted by the diodes of the traction inverter (18).

7. Electric safety braking device according to claim 6, **characterised in that** the bipolar assembly (122) is constituted by a resistor (162) and a contactor (163) which are connected in series, this assembly being connected in parallel on the traction inverter (18).

8. Electric safety braking device according to claim 2 or claim 7, **characterised in that** the resistor (162) is constituted by a part or all of the brake resistor of the rheostatic braking chopper (17).
